Europäisches Patentamt

European Patent Office

Office européen des brevets

(11) Numéro de publication: **0 210 106 B1**

# FASCICULE DE BREVET EUROPEEN

(45) Date de publication de fascicule du brevet:
27.03.91

(21) Numéro de dépôt: **86401578.9**

(22) Date de dépôt: **15.07.86**

(51) Int. Cl.⁵: **A21C 15/00, A47J 37/06,**
**A47J 37/08**

(54) **Appareil de cuisson de produits alimentaires destinés en particulier à être consommés avec du pain.**

(30) Priorité: **18.07.85 FR 8511039**

(43) Date de publication de la demande:
**28.01.87 Bulletin 87/05**

(45) Mention de la délivrance du brevet:
**27.03.91 Bulletin 91/13**

(84) Etats contractants désignés:
**AT BE CH DE FR GB IT LI LU NL SE**

(56) Documents cités:
DE-A- 2 818 593    FR-A- 2 431 274
US-A- 1 777 830    US-A- 2 044 615
US-A- 3 377 943    US-A- 4 119 020

(73) Titulaire: **ITM ENTREPRISES**
**24, rue Auguste-Chabrières**
**F-75737 Paris Cédex(FR)**

(72) Inventeur: **Freuchet, Antoine**
**Résidence Pen Glanic**
**F-56520 Guidel(FR)**

(74) Mandataire: **Netter, André et al**
**Cabinet NETTER, 40, rue Vignon**
**F-75009 Paris(FR)**

Rank Xerox (UK) Business Services

## Description

L'invention concerne un appareil de cuisson de produits alimentaires qui sont destinés en particulier à être consommés avec du pain.

On connaît déjà des appareils de ce type, comme, par example, celui décrit dans le document de brevet DE-A-2818 593, avec deux plaques chauffantes, et qui permettent de cuire, de réchauffer ou de tenir chauds des produits déjà cuits et qui peuvent être utilisés, soit par des commerçants sur des lieux de vente, soit directement par les consommateurs. Lorsque ces produits sont destinés à être consommés avec du pain, et notamment lorsqu'il s'agit de saucisses, il est déjà connu d'enfoncer une broche sur des morceaux de pain pour y former un logement destiné à recevoir le produit, ce qui évite d'avoir à fendre le morceau de pain dans sa longueur pour y placer le produit.

Toutefois, l'utilisation de ces appareils connus entraîne nécessairement un certain nombre de manipulations des produits au moyen d'ustensiles de cuisine, et la mise en place des produits cuits à l'intérieur des morceaux de pain est parfois peu commode.

L'invention a pour objet un appareil permettant d'éviter les inconvénients précités et de simplifier et faciliter

la mise place des produits à l'intérieur de morceaux de pain.

Elle propose à cet effet un appareil de cuisson de produits alimentaires destinés à être consommés avec du pain, avec un gril à deux plaques chauffantes entre lesquelles sont disposés les produits à cuire, et caractérisé par des broches chauffantes portées par l'une desdites plaques et sur lesquelles peuvent être enfichés de morceaux de pain pour leur chauffage et leur conformation avec une empreinte à la forme des produits.

L'appareil selon l'invention permet donc, simultanément, de cuire les produits à consommer, et de chauffer les morceaux de pain en y formant à chaud une empreinte ayant la forme du produit et conservant cette forme, ce qui permet de disposer facilement le produit cuit à l'intérieur du morceau de pain.

Avantageusement, les produits à cuire se présentent sous la forme d'un bloc de viande hachée, de poisson ou autre, muni d'un bâtonnet en forme de broche enfilé dans le bloc et permettant sa manipulation pour la cuisson et la disposition d'un produit à l'intérieur du morceau de pain.

Selon une réalisation particulièrement avantageuse de l'invention, l'une des plaques chauffantes du gril est montée à pivotement sur l'autre, entre une position abaissée horizontale où elle recouvre l'autre plaque chauffante et les produits à cuire, et une position relevée permettant de disposer les produits à cuire sur le gril et de les en retirer, les broches de chauffage et de conformation de morceaux de pain étant alors montées sur la face extérieure de la plaque pivotante. Ces broches sont chauffées, par conduction thermique, par la plaque chauffante sur laquelle elles sont montées.

Selon une autre caractéristique de l'invention, la face de cuisson de l'autre plaque chauffante, qui est fixe et horizontale, comporte des compartiments à la forme des produits à cuire. En outre, cette face de cuisson comprend des rainures de collecte des graisses et jus de cuisson, qui sont reliées par des conduits traversant la plaque à un tiroir de récupératiion situé sous la plaque.

On évite ainsi que les graisses et les jus de cuisson soient complètement brûlés lors de la cuisson des produits en dégageant des fumées et des odeurs désagréables. Par ailleurs, comme les produits à cuire sont placés à l'intérieur de compartiments entre les deux plaques chauffantes, leur cuisson est très rapide et ne produit pratiquement pas de fumée. L'appareil est conçu pour cuire directement des produits surgelés, et permet également la cuisson de produits frais.

Dans la description qui suit, faite à titre d'exemple, on se réfère aux dessins annexés, dans lesquels:

- la figure 1 est une vue en perspective d'un appareil selon l'invention dans sa condition ouverte;
- la figure 2 est une vue en coupe transversale verticale de la partie inférieure de l'appareil selon l'invention;
- la figure 3 est une vue en perspective d'une partie de l'appareil, illustrant son fonctionnement;
- la figure 4 représente schématiquement l'introduction d'un produit cuit dans un morceau de pain;
- les figures 5A, 5B et 5C concernent une variante de réalisation de l'invention, pour la cuisson de produits ayant une forme sensiblement cylindrique.

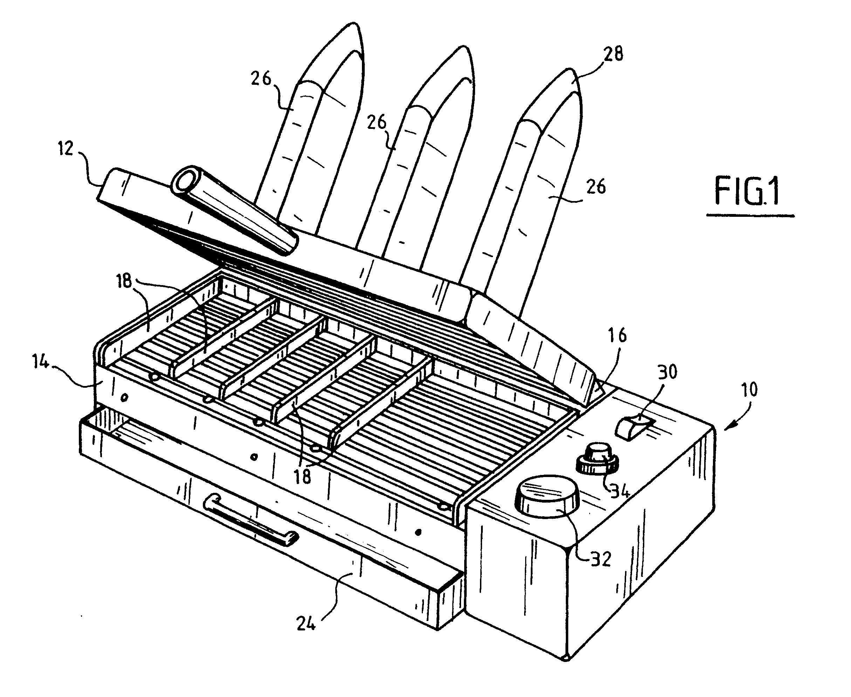

On se réfère d'abord aux figures 1 à 3 relatives à un premier mode de réalisation de l'appareil selon l'invention.

Cet appareil comprend un bâti ou châssis 10, réalisé par exemple en tôle d'acier inoxydable, qui supporte un gril électrique comprenant deux plaques chauffantes 12 et 14, la plaque inférieure 14 étant mcntée fixe et horizontale sur le châssis 10 et la plaque supérieure 12 étant montée pivotante autour d'un axe horizontal au moyen de charnières 16 sur la plaque 14, le long d'un grand côté de celle-ci. Ainsi, la plaque supérieure 12 peut être relevée comme représenté en figure 1, et abaissée horizontalement sur la plaque 14, en recouvrant sensiblement celle-ci.

Sur la face de cuisson de la plaque fixe 14 sont prévues des cloisons verticales 18, parallèles les unes aux autres et s'étendant transversalement sur la plaque 14. Ces cloisons 18 déterminent entre elles des compartiments ayant sensiblement la forme et les dimensions des produits à cuire.

On peut ainsi prévoir un certain nombre de ces compartiments sur la plaque inférieure 14, par exemple au nombre de quatre comme représenté en figure 1, et un compartiment de plus grande taille pour la cuisson de produits ayant des dimensions différentes.

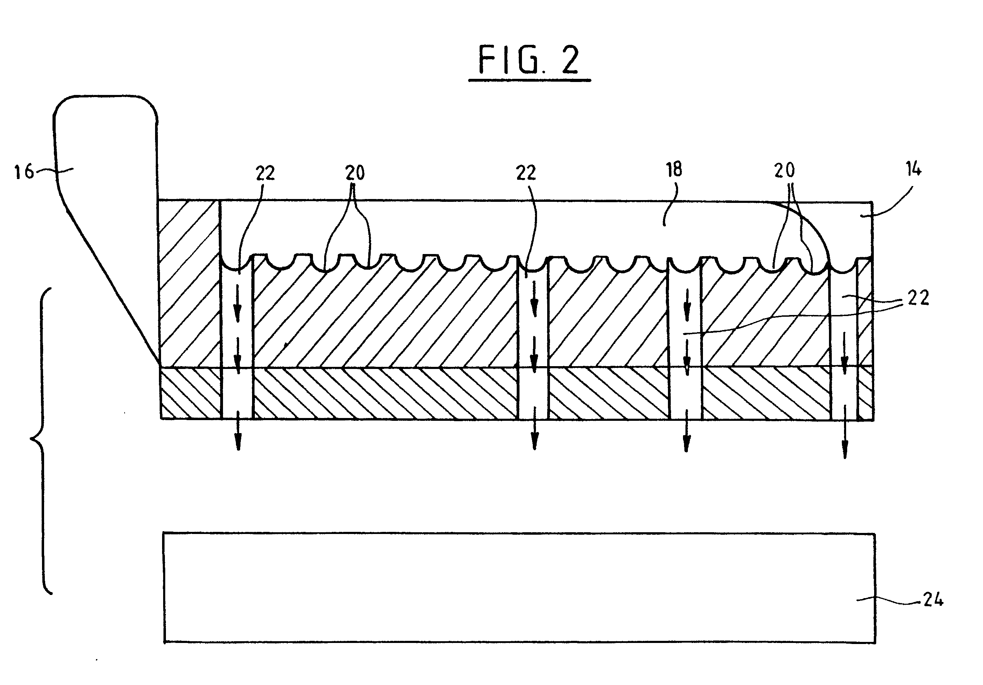

La face de cuisson de la plaque inférieure 14 comprend en outre, comme on le voit mieux en figure 2, des rainures 20 permettant de recueillir les graisses et jus de cuisson et qui sont reliées par des conduits verticaux 22 traversant la plaque 14 à un tiroir 24 de récupération des graisses fondues et des jus de cuisson, ce tiroir 24 étant logé dans le bâti 10 sous la plaque 14.

La plaque chauffante 12, montée à pivotement sur la plaque 14, présente une face inférieure de cuisson qui peut être plane ou conformée à la forme des produits à cuire, selon les cas, et porte sur sa face extérieure un certain nombre de broches 26, qui sont perpendiculaires à cette plaque et qui se terminent par une extrémité pointue 28 ,la forme d'une broche 26 étant sensiblement celle du produit qui sera à introduire dans le pain.

Les plaques chauffantes 12 et 14 sont par exemple réalisées en fonte et comprennent des résistances électriques de chauffage, placées à l'intérieur des plaques et non visibles sur le dessin, qui sont destinées à être alimentées en énergie électrique par l'intermédiaire d'un circuit de commande monté sur le châssis 10 et comprenant par exemple un interrupteur général 30, un thermostat 32 de réglage de la température des plaques 12 et 14, et une minuterie 34. Les broches 26 sont réalisées par exemple en aluminium et sont chauffées, par conduction thermique, par la plaque 12 sur laquelle elles sont montées.

La plaque pivotante 12 et le tiroir 24 sont munis de poignées, par exemple telles que celles représentées en figure 1, respectivement 13 et 15, pour leur manipulation.

Cet appareil est utilisé de la façon suivante.

L'interrupteur général 30 est placé sur la position marche, pour alimenter les résistances électriques des plaques de chauffage 12, 14, puis, après un certain temps de préchauffage, la plaque 12 est relevée et l'on dispose les produits à cuire dans les compartiments formés sur la face de cuisson de la plaque inférieure 14. On abaisse ensuite la plaque 12 sur la plaque 14. Dans cette position, les produits à cuire sont en contact, par leur surface extérieure, avec les faces de cuisson des plaques 12 et 14, ainsi, éventuellement, qu'avec les cloisons 18 délimitant les compartiments. Les graisses et les jus de cuisson collectés dans les rainures 20 de la face de cuisson de la plaque 14 s'écoulent par les conduits 22 et sont recueillis dans le tiroir 24. On peut placer auparavant de l'eau dans ce tiroir, pour éviter les odeurs de graisses et de jus de cuisson.

Lorsque l'on a abaissé la plaque 12 sur la plaque 14 pour la cuisson des produits, on enfile des morceaux de pain 36 sur les broches 26 qui réchauffent ces morceaux de pain et y forment des logements destinés à recevoir les produits à consommer.

Lorsque la cuisson est terminée, on relève la plaque 12, on sort un produit cuit de son compartiment sur la plaque inférieure 14, on retire un morceau de pain 36 d'une broche 26, et on introduit le produit cuit à l'intérieur du morceau de pain en l'enfilant dans le trou qu'y a formé la broche 26.

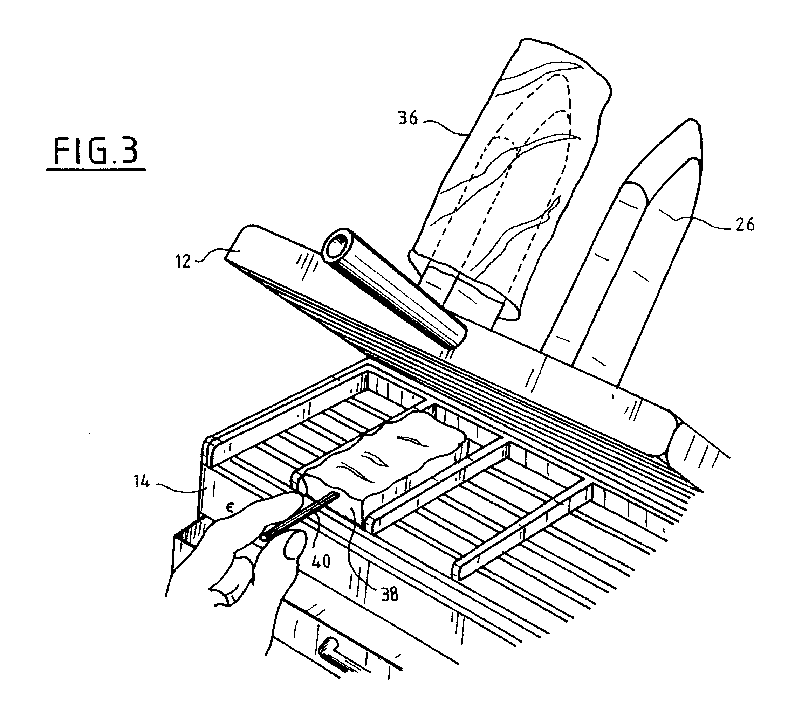

Sur la figure 3 on a montré un bloc de viande hachée ou de poisson ayant une forme parallélépipédique tel qu'il se présente après cuisson à l'ouverture du couvercle 12. On enfonce dans ledit bloc un bâtonnet ou petite tige de bois 40 pour en faciliter la manipulation. Le pain 36 est ôté de la broche 26 qui l'a chauffé et y a formé une cavité correspondant à la forme du bloc 38 lequel y trouve ainsi facilement logement.

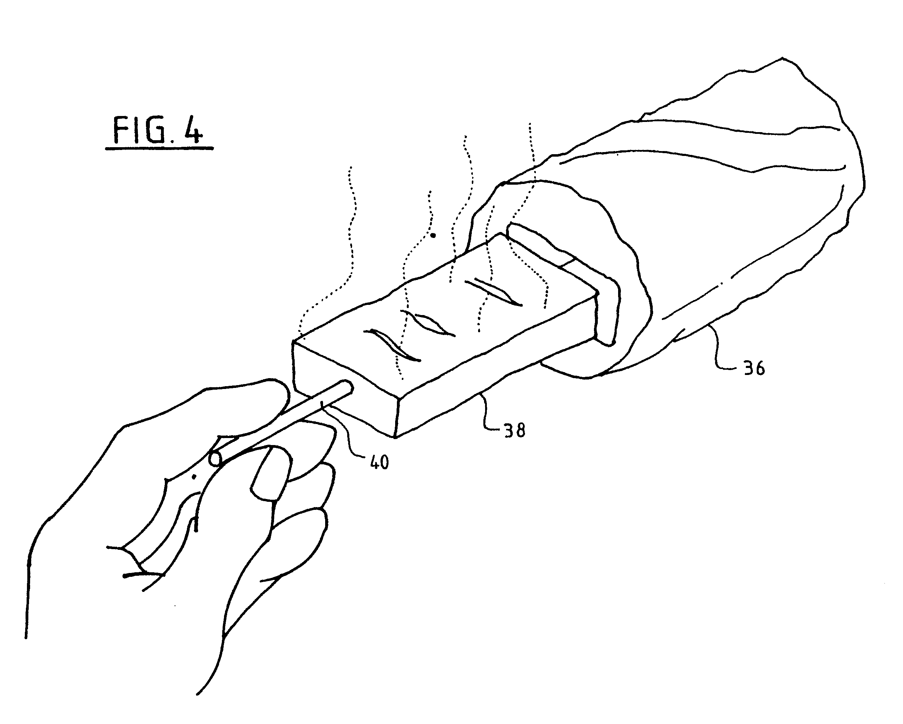

Lorsque le produit cuit est placé dans le morceau de pain (figure 4), la petite tige peut être laissée dans le produit, ou peut en être retirée, à volonté.

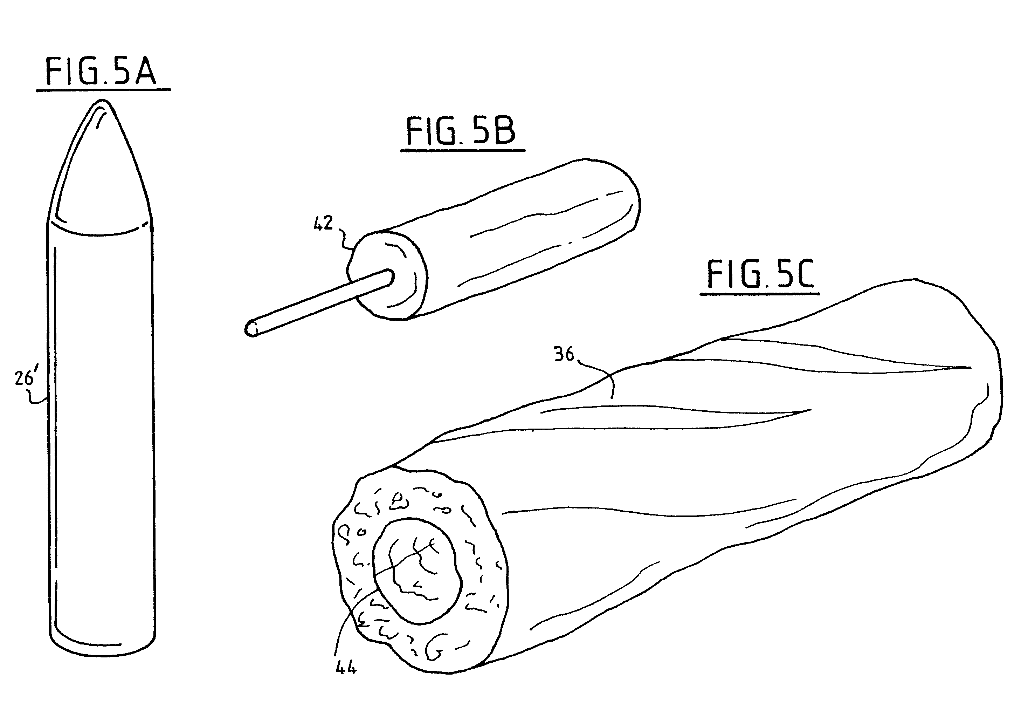

Lorsque les produits à cuire ont une forme différente, par exemple cylindrique comme représenté en 42 sur la figure 5B,les broches 26' montées sur la plaque 14 ont également une forme cylindrique, comme représenté en figure 5A, de façon à former des logements cylindriques 44 à l'intérieur des morceaux de pain 36 (figure 5C).

L'appareil selon l'invention permet donc, de façon générale, de préparer et de servir un produit cuit et chaud (mais non réchauffé) dans du pain chaud, en quelques minutes, sans manipulation et sans utilisation d'accessoires de cuisine.

L'appareil permet de cuire des produits frais, ainsi que des produits surgelés sans devoir les dégeler auparavant. La cuisson des produits se fait sans dégagement d'odeurs et de fumées désagréables.

## Revendications

1. Appareil de cuisson de produits alimentaires destinés en particulier à être consommés avec du pain, caractérisé en ce qu'il comprend un gril à deux plaques chauffantes (12, 14), entre lesquelles sont disposés les produits à cuire, et des broches chauffantes (26) portées par l'une desdites plaques et sur lesquelles peuvent être enfilés des morceaux de pain (36) pour leur chauffage et la formation par enfoncement ou empreinte un logement ayant la forme des produits.

2. Appareil selon la revendication 1, caractérisé en ce que l'une (12) des plaques chauffantes est montée à pivotement sur l'autre plaque (14), entre une position abaissée horizontale où elle recouvre l'autre plaque chauffante (14) et les produits à cuire, et une position relevée permettant de disposer les produits à cuire sur le gril et de les en retirer et en ce que les broches (26) sont montées sur la face extérieure de la plaque pivotante (12).

3. Appareil selon la revendication 1 ou 2, caractérisé en ce que la face de cuisson de l'autre plaque chauffante (14), qui est fixé et horizontale, comporte des compartiments ayant la forme des produits à cuire.

4. Appareil selon la revendication 3, caractérisé en ce que cette face de cuisson comporte également des rainures (20) de collecte des graisses et jus de cuisson, reliées par des conduits (22) traversant la plaque (14) à un tiroir de récupération (24) situé sous cette plaque.

5. Appareil selon l'une des revendications précédentes, caractérisé en ce que les broches (26) sont chauffées, par conduction thermique, par la plaque chauffante (12) sur laquelle elles sont montées.

6. Appareil selon l'une des revendications précédentes, caractérisé en ce que les broches (26) sont perpendiculaires à la plaque sur laquelle elles sont montées.

7. Appareil selon l'une des revendications précédentes, caractérisé en ce que les plaques (12, 14) comprennent des résistances électriques de chauffage reliées à un circuit d'alimentation en énergie électrique comprenant un thermostat (32) de réglage de température et une minuterie (34).

8. Appareil selon l'une des revendications précédentes, caractérisé en ce que les broches (26) sont en aluminium et les plaques chauffantes (12, 14) sont en fonte.

## Claims

1. Cooking apparatus for edible products in particular to be consumed with bread, comprising a grill with two hotplates (12, 14), between which the products to be cooked are arranged, and characterized by heating prongs (26) which are supported by one of the said plates and onto which pieces of bread (36) can be slid for their heating and the formation by pushing in or impression of a recess which has the shape of the products.

2. Apparatus according to Claim 1, characterized in that one (12) of the hotplates is pivotably mounted on the other plate (14), between a horizontal lowered position, in which it covers the other hotplate (14) and the products to be cooked, and a raised position, which makes it possible to arrange the products to be cooked on the grill and to remove them from it, and in that the prongs (26) are mounted on the external surface of the pivoting plate (12).

3. Apparatus according to Claim 1 or 2, characterized in that the cooking surface of the other hotplate (14), which is fixed and horizontal, comprises compartments which have the shape of the products to be cooked.

4. Apparatus according to Claim 3, characterized in that this cooking surface also comprises collecting grooves (20) for the cooking fats and juices, which grooves are connected by channels (22), which run through the plate (14), to a recovery drawer (24) located under this plate.

5. Apparatus according to one of the preceding claims, characterized in that the prongs (26) are heated by thermal conduction by the hotplate (12) on which they are mounted.

6. Apparatus according to one of the preceding claims, characterized in that the prongs (26) are perpendicular to the plate on which they are mounted.

7. Apparatus according to one of the preceding claims, characterized in that the plates (12, 14) comprise electric heating resistances which are connected to an electric power supply circuit comprising a thermostat (32) for adjusting the temperature and a timer (34).

8. Apparatus according to one of the preceding claims, characterized in that the prongs (26) are made of aluminium and the hotplates (12, 14) are made of cast iron.

**Ansprüche**

1. Zubereitungsvorrichtung für eßbare Produkte, welche insbesondere zusameen mit Brot gegessen werden, mit einem Grill mit zwei Heizplatten (12, 14), zwischen denen die zubereitenden Produkte anzuordnen sind, gekennzeichnet durch Heizdorne (26), die von einer der Plattformen getragen werden und auf denen Brotstücke (36) aufgespießt werden können, um sie zu erwännen und sie zur Bildung einer Aufnahme in Form des Produktes zu formen.

2. Vorrichtung nach Anspruch 1, dadurch gekennzeichnet, daß eine (12) der Heizplatten an der anderen (14) schwenkbar gelagert ist, und zwar zwischen einer abgesenkten horizontalen Stellung, in der sie die andere Platte (14) und die zubereitenden Produkte bedeckt, und einer gehobenen Stellung, in der die Auflage und Wegnahme der zubereitenden Produkte auf den Grill bzw. von diesem möglich ist, ferner, daß die Dorne (26) auf der äußeren Fläche der drehbaren Platte (12) angebracht sind.

3. Vorrichtung nach Anspruch 1 oder 2, dadurch gekennzeichnet, daß die Zubereitungsfläche der festen und horizontalen Heizplatte (14) Fächer in Form der zubereitenden Produkte aufweist.

4. Vorrichtung nach Anspruch 3, dadurch gekennzeichnet, daß diese Zubereitungsfläche Fett- und Saftsammelrillen (20) aufweist, die durch die Platte (14) durchquerende Leitungen (22) mit einer unterhalb dieser Platte angeordneten Schublade (24) verbunden sind.

5. Vorrichtung nach einem der vorstehenden Ansprüche, dadurch gekennzeichnet, daß die Dorne (26) durch Wärmeleitung von der Heizplatte (12), auf der sie angeordnet sind, beheizt sind.

6. Vorrichtung nach einem der vorstehenden Ansprüche, dadurch gekennzeichnet, daß die Dorne (26) senkrecht auf der sie tragenden Platte angebracht sind.

7. Vorrichtung nach einem der vorstehenden Ansprüche, dadurch gekennzeichnet, daß die Platten (12, 14) elektrische Heizwiderstände besitzen, die an eine elektrische Anspeisung angeschlossen sind, die einen Thermostat (32) und eine Zeitschaltung (34) aufweist.

8. Vorrichtung nach einem der vorstehenden Ansprüche, dadurch gekennzeichnet, daß die Dorne (26) aus Aluminium und die Heizplatten (12, 14) aus Guß bestehen.

**FIG1**

# FIG. 2

EP 0 210 106 B1

# FIG.3

FIG. 4

FIG.5A

FIG.5B

FIG.5C

42

26'

36

44

EP 0 210 106 B1